# EUROPEAN PATENT APPLICATION

(11) **EP 4 748 223 A1**
(43) Date of publication of application: **27.05.2026**
(21) Application number: 25210788.3
(22) Date of filing: 23.10.2025
(51) Int. Cl.: A01G 23/099

(54) **ELECTRIC LOGGING WEDGE**

(30) Priority: 21.11.2024 CN 202411672581; 14.10.2025 CN 202511473316
(71) Applicant: Zhejiang Dongqiao Machinery Co., Ltd., Lishui City, Zhejiang 321404 (CN)
(72) Inventor: YING, Linqi, Lishui City, 321404 (CN); XU, Senyan, Lishui City, 321404 (CN); CHEN, Cuiping, Lishui City, 321404 (CN)
(74) Representative: Elzaburu S.L.P.

(57) **Abstract**

The present invention discloses an electric logging wedge. The electric logging wedge includes a main logging wedge block and a secondary logging wedge block. A notch for accommodating the secondary logging wedge block is provided at the bottom of the main logging wedge block. A driving mechanism for driving the secondary logging wedge block to extend forward/retract into the notch is provided at a rear side of the main logging wedge block. Non-return structures are provided on a top surface of the main logging wedge block and a bottom surface of the secondary logging wedge block. During logging, the electric logging wedge can automatically move to an inner side of a crack in a tree trunk. The entire logging process does not require a logger to perform close-range operation, thus eliminating potential safety hazards, and achieving simple, time-saving, and labour-saving operation.

## Description

### TECHNICAL FIELD

The present invention relates to the technical field of logging tools, in particular to an electric logging wedge.

### BACKGROUND

At present, electric saws are the most commonly used logging tools in logging operations. However, loggers performing close-range operations with electric saws pose certain risks. Moreover, logging with electric saws fails to control a direction of tree fall, leading to potential safety hazards such as injuries to passers-by and damage to surrounding houses and buildings. To resolve these problems, electric logging wedges have been invented. Using electric logging wedges for logging allows control over the direction of tree fall, and loggers do not need to conduct close-range logging, thereby improving logging safety.

Existing electric logging wedges include a wedge block with a non-return structure on a top surface thereof and a propulsion device. During use, a logger first uses an electric saw to cut a crack in a tree trunk, inserts the wedge block into the crack, and activates the propulsion device. The propulsion device pushes the wedge block deeper into the crack to widen the crack. When the wedge block reaches a certain depth, the tree falls in a predetermined direction, completing logging. However, when using the existing electric logging wedge for logging of large trees, due to a large trunk diameter of large trees, it is still impossible to fell the large trees even when the propulsion device pushes the wedge block to an extreme position inside the trunk crack. In such cases, the logger needs to insert an ordinary wedge into the trunk crack for support, reset the electric logging wedge, push the electric logging wedge to the innermost side of the trunk crack, and activate the electric logging wedge to operate again. This cycle is repeated until the large trees are felled. Since close-range operation by loggers is required, there are potential safety hazards, and the operation is cumbersome, time-consuming, and labour-intensive.

### SUMMARY

To resolve the foregoing technical problems, the present invention provides an electric logging wedge, which can automatically move to an inner side of a crack in a tree trunk. The entire logging process does not require a logger to perform close-range operation, thus eliminating potential safety hazards, and achieving simple, time-saving, and labour-saving operation.

To resolve the foregoing problems, the present invention is implemented using the following technical solutions.

The electric logging wedge according to the present invention includes a main logging wedge block and a secondary logging wedge block. A notch for accommodating the secondary logging wedge block is provided at the bottom of the main logging wedge block. A driving mechanism for driving the secondary logging wedge block to extend forward/retract into the notch is provided at a rear side of the main logging wedge block. Non-return structures are provided on a top surface of the main logging wedge block and a bottom surface of the secondary logging wedge block.

In this solution, the non-return structures are provided on the top surface of the main logging wedge block and the bottom surface of the secondary logging wedge block. These non-return structures ensure that both the main logging wedge block and the secondary logging wedge block can only move forward and cannot move backward inside a crack in a tree trunk.

During use, a logger first uses an electric saw to cut a crack in a tree trunk, inserts the main logging wedge block into the crack, and activates the electric logging wedge to operate. The driving mechanism drives the secondary logging wedge block to extend forward out of the notch. The main logging wedge block is clamped by the tree and cannot move backward due to the non-return structure on the top surface thereof. When the secondary logging wedge block extends forward to an extreme position, the driving mechanism drives the secondary logging wedge block to retract into the notch. Since there is the non-return structure on the bottom surface of the secondary logging wedge block, the secondary logging wedge block is clamped by the tree and cannot move backward via this non-return structure, causing the main logging wedge block to move forward and allowing the secondary logging wedge block to retract into the notch, thereby completing the overall forward movement of the electric logging wedge and widening the crack. Subsequently, the driving mechanism drives the secondary logging wedge block to extend forward out of the notch. When the secondary logging wedge block extends forward to the extreme position, the driving mechanism drives the secondary logging wedge block to retract into the notch, which in turn causes the main logging wedge block to move forward. This cycle is repeated until the tree is felled.

Preferably, the main logging wedge block includes a main wedge body and a connecting member. The connecting member is provided at a rear side of the main wedge body. The driving mechanism is fixedly connected to the connecting member. A top surface of the main wedge body is a first inclined surface inclined upward from front to back. A bottom surface of the main wedge body is a second inclined surface inclined downward from front to back. The notch is located on the second inclined surface.

Preferably, a front end of the first inclined surface is connected to a front end of the second inclined surface. The bottom surface of the secondary logging wedge block is a third inclined surface inclined downward from front to back. The third inclined surface is parallel to the second inclined surface.

Preferably, when the secondary logging wedge block retracts into the notch, an overall longitudinal section of the main wedge body and the secondary logging wedge block is an isosceles triangle, where a base of the isosceles triangle is in a vertical state. A longitudinal section of the secondary logging wedge block is a right triangle, where a hypotenuse of the right triangle is located on the third inclined surface, a longer leg of the right triangle is in a horizontal state, and a shorter leg of the right triangle is in a vertical state.

When the secondary logging wedge block moves forward, the main logging wedge block may be pushed upward, which makes the non-return structure on the top surface of the main logging wedge block come into contact with the tree more tightly. When the main logging wedge block moves forward, the secondary logging wedge block may be pushed downward, which makes the non-return structure on the bottom surface of the secondary logging wedge block come into contact with the tree more tightly. The non-return structures are located on the top surface of the main logging wedge block and the bottom surface of the secondary logging wedge block, and have a large contact area with the tree, resulting in a good non-return effect.

Preferably, the main wedge body includes a first wedge block and plate bodies symmetrically provided on left and right sides of the first wedge block. A first connecting notch is provided at a rear side of the first wedge block. A first connecting block matched with the first connecting notch is provided in the first connecting notch. The first wedge block is detachably connected to the plate bodies. The first connecting block is detachably connected to the plate bodies. The first wedge block is detachably connected to the first connecting block. The connecting member is fixedly connected to a rear side of the first connecting block.

When the first wedge block is worn after long-term use and needs to be replaced, the first wedge block is separately detachably connected to the first connecting block and the plate bodies, facilitating disassembly, assembly, and replacement.

Preferably, the secondary logging wedge block includes a second wedge block. A second connecting notch is provided at a rear side of the second wedge block. A second connecting block matched with the second connecting notch is provided in the second connecting notch. The second wedge block is detachably connected to the second connecting block.

When the second wedge block is worn after long-term use and needs to be replaced, the second wedge block is detachably connected to the second connecting block, facilitating disassembly, assembly, and replacement.

Preferably, a first limiting notch is provided at a front side of the first connecting notch. A first limiting block matched with the first limiting notch is provided at a front side of the first connecting block. A plurality of second limiting notches are provided on an upper surface of the first connecting block. Second limiting blocks matched with the second limiting notches are provided at positions, corresponding to the second limiting notches, on the top of the first connecting notch. A third limiting notch is provided at a front side of the second connecting notch. A third limiting block matched with the third limiting notch is provided at a front side of the second connecting block. A plurality of fourth limiting notches are provided on a lower surface of the second connecting block. Fourth limiting blocks matched with the fourth limiting notches are provided at positions, corresponding to the fourth limiting notches, at the bottom of the second connecting notch.

The first limiting block is configured to restrict the up-down movement of the first connecting block. The second limiting block is configured to restrict the front-back movement of the second connecting block. The third limiting block is configured to restrict the up-down movement of the second connecting block. The fourth limiting block is configured to restrict the front-back movement of the second connecting block.

Preferably, a through hole is provided on the connecting member. The through hole is communicated with the notch. The driving mechanism includes a lead screw, a lead screw nut, and a driving module. The driving module is fixedly connected to the connecting member. The lead screw extends into the notch through the through hole. The lead screw nut is sleeved on the lead screw and fixedly connected to the secondary logging wedge block. The driving module is configured to drive the lead screw to rotate. A strip-shaped guide hole along a front-back direction is provided on the plate body. The strip-shaped guide hole is communicated with the notch. Guide columns are symmetrically provided on left and right sides of the second connecting block. The guide columns pass through the strip-shaped guide hole on the corresponding side and are capable of sliding forward and backward along the strip-shaped guide hole.

When the driving module drives the lead screw to rotate in a forward direction, the lead screw nut moves forward and pushes the secondary logging wedge block to extend forward out of the notch. When the driving module drives the lead screw to rotate in a reverse direction, the lead screw nut moves backward and pulls the secondary logging wedge block to retract backward into the notch.

Preferably, a guide groove along a front-back direction is provided on a bottom surface of the first connecting block. A guide block matched with the guide groove is provided on a top surface of the second connecting block. The guide block is located in the guide groove and is capable of sliding forward and backward along the guide groove. A first limiting surface inclined backward is provided at a front side of the guide groove. A second limiting surface matched with the first limiting surface is provided at a front side of the guide block.

When the secondary logging wedge block extends forward to the extreme position, the first limiting surface comes into contact with the second limiting surface.

Preferably, the non-return structure includes a plurality of convex strips arranged side by side from front to back. The convex strips are provided along a left-right direction. The convex strips have a triangular longitudinal section. Top surfaces of the convex strips are inclined from front to back to the side far away from the main logging wedge block.

The top surfaces of the convex strips located on the main logging wedge block are inclined upward from front to back, while the tops surface of the convex strips located on the secondary logging wedge block are inclined downward from front to back.

Preferably, the driving module includes a driving motor, a transmission mechanism, an impact mechanism, and an output shaft. A rear end of the lead screw is coaxially connected to the output shaft. The impact mechanism is provided between the output shaft and the transmission mechanism and is connected to the output shaft and the transmission mechanism. The impact mechanism is configured to apply an impact force to the output shaft. The transmission mechanism is connected to the driving motor. The transmission mechanism is configured to decelerate the rotation of the driving motor and then transmit to the output shaft.

The driving motor drives the impact mechanism to apply a rotating impact force to the lead screw after being decelerated by the transmission mechanism, thereby driving the lead screw to rotate. The transmission mechanism is a reducer.

Preferably, the impact mechanism includes an active impact cylinder, a passive impact cylinder, and a transmission shaft. A rear end of the transmission shaft is connected to the driving motor via the transmission mechanism. A front end of the transmission shaft is rotatably connected to a rear end of the passive impact cylinder. A front end of the passive impact cylinder is fixedly connected to a rear end of the output shaft. The active impact cylinder is sleeved on the transmission shaft and is capable of sliding along the transmission shaft. The output shaft, the passive impact cylinder, the transmission shaft, and the active impact cylinder are all coaxial. Two active impact blocks are provided on a front side surface of the active impact cylinder along a circumferential direction. Passive impact blocks are provided on an outer wall of the passive impact cylinder at positions corresponding to the active impact blocks. Two bilaterally symmetrical V-shaped ball tracks are provided on an outer wall of the transmission shaft. Rolling balls capable of rolling along the V-shaped ball tracks are provided in the V-shaped ball tracks. Two bilaterally symmetrical accommodating grooves are provided in the front of an inner wall of the active impact cylinder. The direction of the accommodating grooves is parallel to the axis of the active impact cylinder. The accommodating grooves are in one-to-one correspondence with the V-shaped ball tracks. The accommodating grooves are semi-cylindrical. One half of each rolling ball is located in the corresponding V-shaped ball track, and the other half of the rolling ball is located in the corresponding accommodating groove. A push ring and a reset spring are further sleeved on the transmission shaft. The push ring is capable of sliding along the transmission shaft. A groove for accommodating the push ring is provided at a rear side of the active impact cylinder. The push ring is located in the groove. An annular stop block is provided at a rear end of the transmission shaft. A front end of the reset spring is connected to the push ring. A rear end of the reset spring is connected to the stop block.

Preferably, a protective shell is provided at the rear side of the main logging wedge block. The driving mechanism is located in the protective shell. A battery pack for supplying power to the electric logging wedge is provided at a rear end of the protective shell. The battery pack is detachably connected to the protective shell.

Preferably, a controller is provided in the protective shell. The controller is electrically connected to the driving motor. The controller is configured to control the operation of the electric logging wedge.

Preferably, a wireless communication module is further provided inside the protective shell. The wireless communication module is electrically connected to the controller. A user may perform wireless communication with the wireless communication module through a remote control device such as a mobile phone or a remote controller to remotely control the operation of the electric logging wedge.

Preferably, handles are symmetrically provided on the left and right sides of the main logging wedge block. The handles are located on rear sides of the plate bodies, and strap buckles are provided at rear ends of the handles. The handles facilitate a user to hold the electric logging wedge by hand, and the strap buckles may be configured to mount straps, making the electric logging wedge easy to carry.

Preferably, a sensor is provided on the top surface of the main logging wedge block. The sensor is configured to sense whether there is an obstacle above the main logging wedge block. The sensor is electrically connected to the controller.

The beneficial effects of the present invention are as follows: (1) During logging, the electric logging wedge can automatically move to an inner side of a crack in a tree trunk. The entire logging process does not require a logger to perform close-range operation, thus eliminating potential safety hazards, and achieving simple, time-saving, and labour-saving operation. The electric logging wedge is applicable to trees of any diameter, and has strong applicability. (2) The non-return structures are located on the top surface of the main logging wedge block and the bottom surface of the secondary logging wedge block, and have a large contact area with the tree, resulting in a good non-return effect. (3) The first wedge block and the second wedge block are convenient to assemble and disassemble, facilitating replacement after wear.

### BRIEF DESCRIPTION OF THE DRAWINGS

FIG. 1 is a schematic diagram of a structure of Embodiment 1;
FIG. 2 is a schematic diagram of a secondary logging wedge block in an extended state of Embodiment 1;
FIG. 3 is a schematic diagram of an internal structure of Embodiment 1;
FIG. 4 is a top view of Embodiment 1;
FIG. 5 is a sectional view taken along line A-A of FIG. 4;
FIG. 6 is a schematic diagram of a structure of a first wedge block and a first connecting block;
FIG. 7 is a schematic diagram of a structure of a first connecting block;
FIG. 8 is an exploded view of a secondary logging wedge block;
FIG. 9 is an assembly diagram of a transmission mechanism, an impact mechanism, and an output shaft of Embodiment 2;
FIG. 10 is a schematic diagram of an internal structure of FIG. 9;
FIG. 11 is a schematic diagram of a structure of a transmission shaft;
FIG. 12 is a schematic diagram of a structure of an active impact cylinder; and
FIG. 13 is a cross-sectional view of an assembly composed of an active impact cylinder and a transmission shaft.

In the figures: 1: main logging wedge block, 2: secondary logging wedge block, 3: notch, 4: non-return structure, 5: connecting member, 6: first wedge block, 7: plate body, 8: first connecting notch, 9: first connecting block, 10: second wedge block, 11: second connecting notch, 12: second connecting block, 13: first limiting notch, 14: first limiting block, 15: second limiting notch, 16: second limiting block, 17: third limiting notch, 18: third limiting block, 19: fourth limiting notch, 20: fourth limiting block, 21: through hole, 22: lead screw, 23: lead screw nut, 24: driving module, 25: strip-shaped guide hole, 26: guide column, 27: screw head, 28: moving groove, 29: guide groove, 30: guide block, 31: first limiting surface, 32: second limiting surface, 33: travel switch, 34: convex strip, 35: driving motor, 36: transmission mechanism, 37: impact mechanism, 38: output shaft, 39: active impact cylinder, 40: passive impact cylinder, 41: transmission shaft, 42: active impact block, 43: passive impact block, 44: V-shaped ball track, 45: rolling ball, 46: accommodating groove, 47: push ring, 48: groove, 49: stop block, 50: reset spring, 51: protective shell, 52: battery pack, 53: handle, 54: threaded hole, and 55: second inclined surface.

### DETAILED DESCRIPTION

The technical solution of the present invention will be further specifically described below through embodiments and in conjunction with the accompanying drawings.

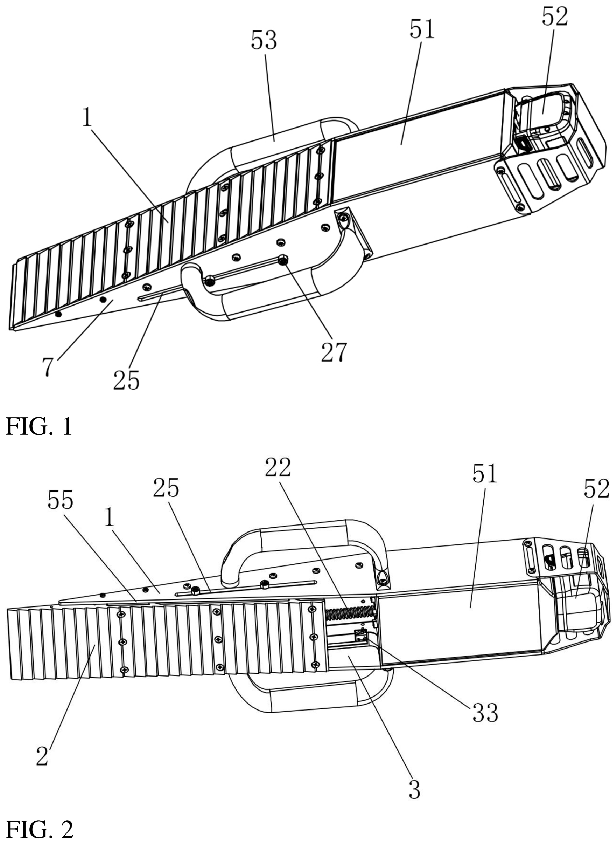

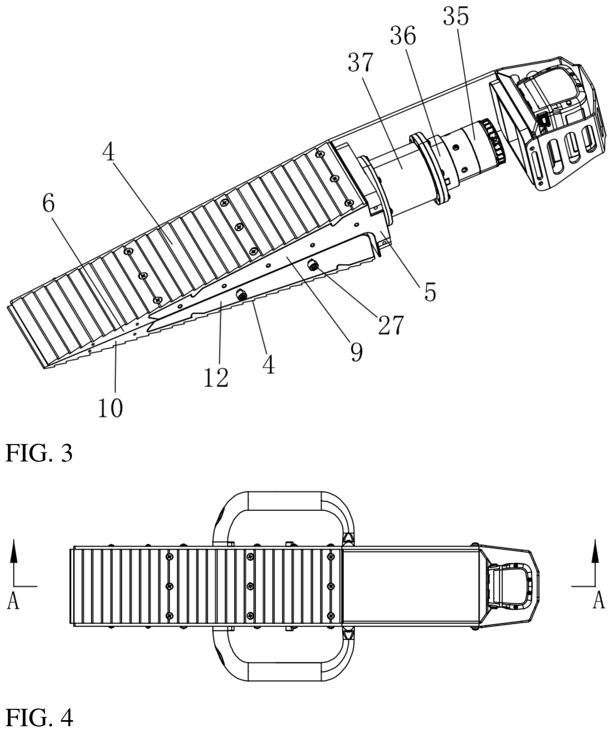

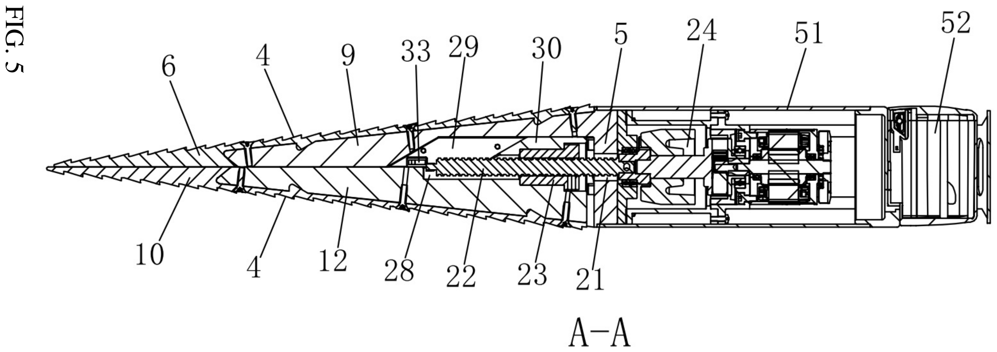

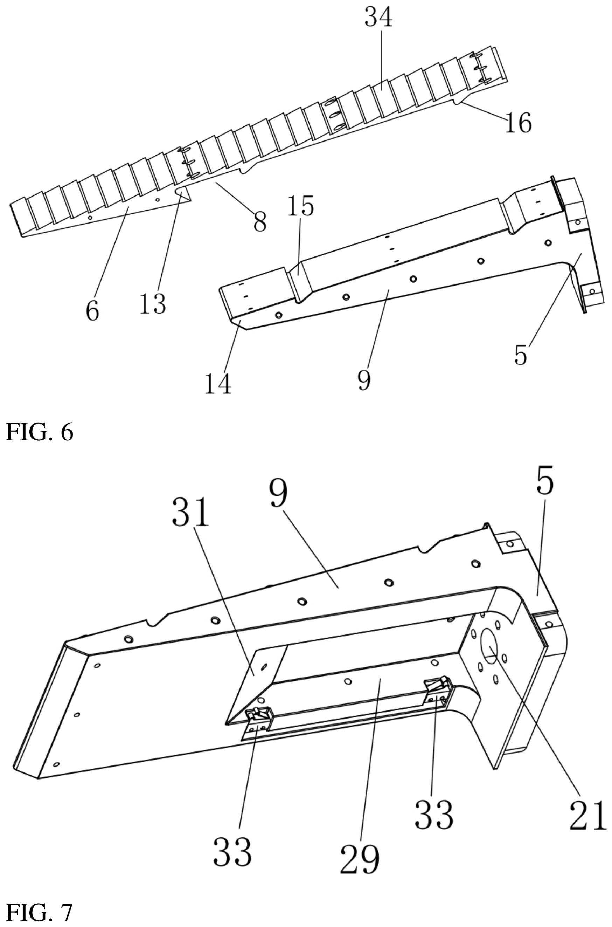

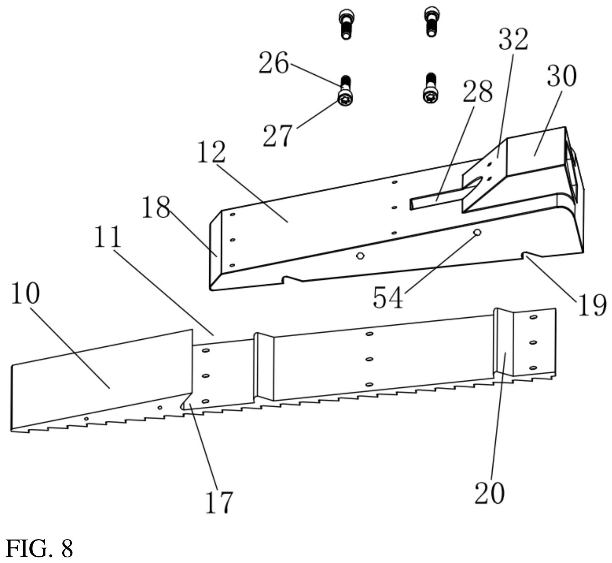

Embodiment 1: An electric logging wedge of this embodiment, as shown in FIG. 1 to FIG. 8, includes a primary logging wedge block 1 and a secondary logging wedge block 2. A notch 3 for accommodating the secondary logging wedge block 2 is provided at the front side of a bottom surface of the primary logging wedge block 1. A driving mechanism for driving the secondary logging wedge block 2 to extend forward/retract into the notch 3 is provided at the rear side of the primary logging wedge block 1. Non-return structures 4 are provided at the top of the primary logging wedge block 1 and the bottom of the secondary logging wedge block 2.

The main logging wedge block 1 includes a main wedge body and a connecting member 5. The connecting member 5 is provided at a rear side of the main wedge body. The driving mechanism is fixedly connected to the connecting member 5. A top surface of the main wedge body is a first inclined surface inclined upward from front to back. A bottom surface of the main wedge body is a second inclined surface 55 inclined downward from front to back. The notch 3 is located on the second inclined surface 55.

A front end of the first inclined surface is connected to a front end of the second inclined surface via a rounded corner. The bottom surface of the secondary logging wedge block 2 is a third inclined surface inclined downward from front to back. The third inclined surface is parallel to the second inclined surface. Preferably, the third inclined surface and the second inclined surface are located on a same plane.

When the secondary logging wedge block 2 retracts into the notch 3, an overall longitudinal section of the main wedge body and the secondary logging wedge block 2 is an isosceles triangle, where a base of the isosceles triangle is in a vertical state. A longitudinal section of the secondary logging wedge block 2 is a right triangle, where a hypotenuse of the right triangle is located on the third inclined surface, a longer leg of the right triangle is in a horizontal state, and a shorter leg of the right triangle is in a vertical state.

A protective shell 51 is provided at the rear side of the connecting member 5. The driving mechanism is located in the protective shell 51. A battery pack 52 for supplying power to the electric logging wedge is provided at a rear end of the protective shell 51. The battery pack 52 is detachably connected to the protective shell 51.

The non-return structure 4 includes a plurality of convex strips 34 arranged side by side from front to back. The convex strips 34 are provided along a left-right direction. The convex strips 34 have a triangular longitudinal section. Top surfaces of the convex strips 34 are inclined from front to back to the side far away from the main logging wedge block 1. To be specific, the top surfaces of the convex strips 34 located on the main logging wedge block 1 are inclined upward from front to back, while the tops surface of the convex strips 34 located on the secondary logging wedge block 2 are inclined downward from front to back. Preferably, the longitudinal section of the convex strips 34 is in the shape of a right triangle or an obtuse triangle.

In this solution, the non-return structures are provided on the top surface of the main logging wedge block and the bottom surface of the secondary logging wedge block. The longitudinal section of the non-return structures is in the shape of saw teeth inclined backward, thereby ensuring that both the main logging wedge block and the secondary logging wedge block can only move forward and cannot move backward inside a crack in a tree trunk.

During use, a logger first uses an electric saw to cut a crack in a tree trunk, inserts the main logging wedge block into the crack, and activates the electric logging wedge to operate. The driving mechanism drives the secondary logging wedge block to extend forward out of the notch. The main logging wedge block is clamped by the tree and cannot move backward under the action of the non-return structure on the top surface thereof. When the secondary logging wedge block extends forward to an extreme position, the driving mechanism drives the secondary logging wedge block to retract into the notch. Since the secondary logging wedge block is clamped by the tree and cannot move backward under the action of the non-return structure on the bottom surface thereof, the main logging wedge block moves forward, and the secondary logging wedge block is allowed to retract into the notch, thereby completing the overall forward movement of the electric logging wedge and widening the crack. Subsequently, the driving mechanism drives the secondary logging wedge block to extend forward out of the notch. When the secondary logging wedge block extends forward to the extreme position, the driving mechanism drives the secondary logging wedge block to retract into the notch, which in turn causes the main logging wedge block to move forward. This cycle is repeated until the tree is felled.

Since the overall longitudinal section of the main wedge body and the secondary logging wedge block is an isosceles triangle (where the base of the isosceles triangle is in a vertical state) and the longitudinal section of the secondary logging wedge block is a right triangle, when the secondary logging wedge block moves forward, the main logging wedge block may be pushed upward, which makes the non-return structure on the top surface of the main logging wedge block come into contact with the tree more tightly. When the main logging wedge block moves forward, the secondary logging wedge block may be pushed downward, which makes the non-return structure on the bottom surface of the secondary logging wedge block come into contact with the tree more tightly. The non-return structures are located on the top surface of the main logging wedge block and the bottom surface of the secondary logging wedge block, and have a large contact area with the tree, resulting in a good non-return effect.

Throughout the logging process, the electric logging wedge automatically completes the entire logging procedure, which achieves simple, time-saving, and labour-saving operation and does not require a logger to perform close-range operation, thus eliminating potential safety hazards. The electric logging wedge is applicable to trees of any diameter, and has strong applicability.

The main wedge body includes a first wedge block 6 and plate bodies 7 symmetrically provided on left and right sides of the first wedge block 6. A first connecting notch 8 is provided at a rear side of the first wedge block 6. A first connecting block 9 matched with the first connecting notch 8 is provided in the first connecting notch 8. The first wedge block 6 is detachably connected to the plate bodies 7 via screws. The first connecting block 9 is detachably connected to the plate bodies 7 via screws. The first wedge block 6 is detachably connected to the first connecting block 9 via a screw. The connecting member 5 is fixedly connected to a rear side of the first connecting block 9.

The secondary logging wedge block 2 includes a second wedge block 10. A second connecting notch 11 is provided at a rear side of the second wedge block 10. A second connecting block 12 matched with the second connecting notch 11 is provided in the second connecting notch 11. The second wedge block 10 is detachably connected to the second connecting block 12 via a screw.

When the electric logging wedge is used for logging, the first wedge block and the second wedge block interact with the tree for a long time, causing the non-return structures to be prone to wear and requiring frequent replacement. The first wedge block is separately detachably connected to the first connecting block and the plate bodies, and the second wedge block is detachably connected to the second connecting block, facilitating disassembly, assembly, and replacement.

A first limiting notch 13 is provided at a front side of the first connecting notch 8. A first limiting block 14 matched with the first limiting notch 13 is provided at a front side of the first connecting block 9. Two second limiting notches 15 are provided on an upper surface of the first connecting block 9. Second limiting blocks 16 matched with the second limiting notches 15 are provided at positions, corresponding to the second limiting notches 15, on the top of the first connecting notch 8. A third limiting notch 17 is provided at a front side of the second connecting notch 11. A third limiting block 18 matched with the third limiting notch 17 is provided at a front side of the second connecting block 12. Two fourth limiting notches 19 are provided on a lower surface of the second connecting block 12. Fourth limiting blocks 20 matched with the fourth limiting notches 19 are provided at positions, corresponding to the fourth limiting notches 19, at the bottom of the second connecting notch 15.

The first limiting block is configured to restrict the up-down movement of the first connecting block. The second limiting block is configured to restrict the front-back movement of the second connecting block. The third limiting block is configured to restrict the up-down movement of the second connecting block. The fourth limiting block is configured to restrict the front-back movement of the second connecting block.

A through hole 21 is provided on the connecting member 5. The through hole 21 is communicated with the notch 3. The driving mechanism includes a lead screw 22, a lead screw nut 23, and a driving module 24. The driving module 24 is fixedly connected to the connecting member 5. The lead screw 22 extends into the notch 3 through the through hole 21. The lead screw nut 23 is sleeved on the lead screw 22 and fixedly connected to the secondary logging wedge block 2. The driving module 24 is configured to drive the lead screw 22 to rotate. A moving groove 28 for the lead screw 22 to move forward and backward is provided on the second connecting block 12. A strip-shaped guide hole 25 along a front-back direction is provided on the plate body 7. The strip-shaped guide hole 25 is communicated with the notch 3. Guide columns 26 are symmetrically provided on left and right sides of the second connecting block 12. The guide columns 26 pass through the strip-shaped guide hole 25 on the corresponding side and are capable of sliding forward and backward along the strip-shaped guide hole 25.

A guide groove 29 along a front-back direction is provided on a bottom surface of the first connecting block 9. A guide block 30 matched with the guide groove 29 is provided on a top surface of the second connecting block 12. The guide block 30 is located in the guide groove 29 and is capable of sliding forward and backward along the guide groove 29. A first limiting surface 31 inclined backward is provided at a front side of the guide groove 29. A second limiting surface 32 matched with the first limiting surface 31 is provided at a front side of the guide block 30.

Travel switches 33 are respectively provided at front and rear ends of a side wall of the guide groove 29. A controller is provided in the protective shell 51. The controller is electrically connected to the driving module 24 and the travel switches 33. The controller is configured to control the operation of the electric logging wedge.

When the driving module drives the lead screw to rotate in a forward direction, the lead screw nut moves forward and pushes the secondary logging wedge block to extend forward out of the notch, and the guide column moves forward along the strip-shaped guide hole. When the guide block comes into contact with the travel switch at the front end of the side wall of the guide groove, the first limiting surface comes into contact with the second limiting surface, and the secondary logging wedge block extends forward to a front extreme position. The travel switch at the front end of the side wall of the guide groove sends a trigger signal to the controller, and the controller controls the driving module to drive the lead screw to rotate in a reverse direction.

When the driving module drives the lead screw to rotate in the reverse direction, the lead screw nut moves backward and pulls the secondary logging wedge block to retract backward into the notch, and the guide column moves backward along the strip-shaped guide hole. When the guide block comes into contact with the travel switch at the rear end of the side wall of the guide groove, the secondary logging wedge block retracts backward to a rear extreme position. The travel switch at the rear end of the side wall of the guide groove sends a trigger signal to the controller, and the controller controls the driving module to drive the lead screw to rotate in the forward direction.

External threads are provided on an inner side of the guide column 26. The second connecting block 12 is provided with a threaded hole 54 matched with the external threads. A coaxial screw head 27 is provided at an outer end of the guide column 26, facilitating the replacement of the guide column.

Handles 53 are symmetrically provided on the left and right sides of the main logging wedge block 1. The handles 53 are located on rear sides of the plate bodies 7, and strap buckles are provided at rear ends of the handles 53. The handles facilitate a user to hold the electric logging wedge by hand, and the strap buckles may be configured to mount straps, making the electric logging wedge easy to carry.

A wireless communication module is further provided inside the protective shell 51. The wireless communication module is electrically connected to the controller. A user may perform wireless communication with the wireless communication module through a remote control device such as a mobile phone or a remote controller to remotely control the operation of the electric logging wedge.

A sensor may be provided on the top surface of the main logging wedge block 1. The sensor is configured to sense whether there is an obstacle above the main logging wedge block. The sensor is electrically connected to the controller. The sensor may be a distance sensor. During logging, the main logging wedge block is inserted into a crack in a tree trunk, and the electric logging wedge is activated to operate. The distance sensor detects an obstacle above the main logging wedge block, and the driving mechanism drives the secondary logging wedge block to extend forward out of the notch. When the secondary logging wedge block extends forward to an extreme position, the driving mechanism drives the secondary logging wedge block to retract into the notch. Since the secondary logging wedge block cannot move backward under the action of the non-return structure, the main logging wedge block moves forward, and the secondary logging wedge block is allowed to retract into the notch, achieving the overall forward movement of the electric logging wedge and widening the crack. If the tree has not been felled, the driving mechanism drives the secondary logging wedge block to extend forward out of the notch. When the secondary logging wedge block extends forward to the extreme position, the driving mechanism drives the secondary logging wedge block to retract into the notch, and the electric logging wedge continues to move forward as a whole to further widen the crack. This cycle is repeated until the distance sensor detects no obstacle above the main logging wedge block, at which point the controller determines that the tree has been felled and controls the electric logging wedge to stop operating.

Embodiment 2: The electric logging wedge of this embodiment differs from Embodiment 1 only in the driving module while the remaining structure is the same as that of Embodiment 1.

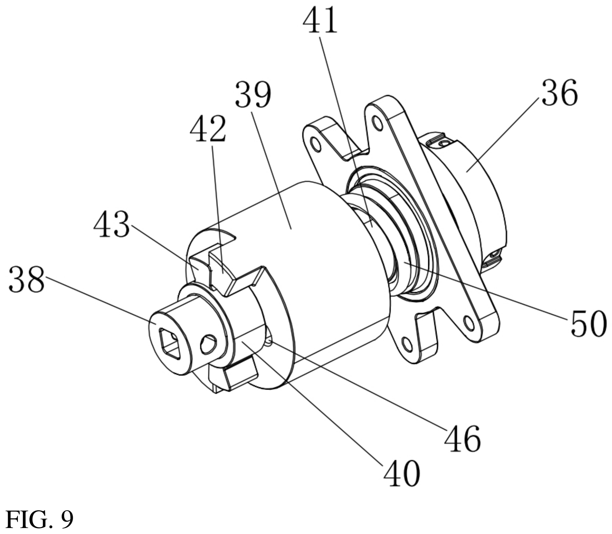

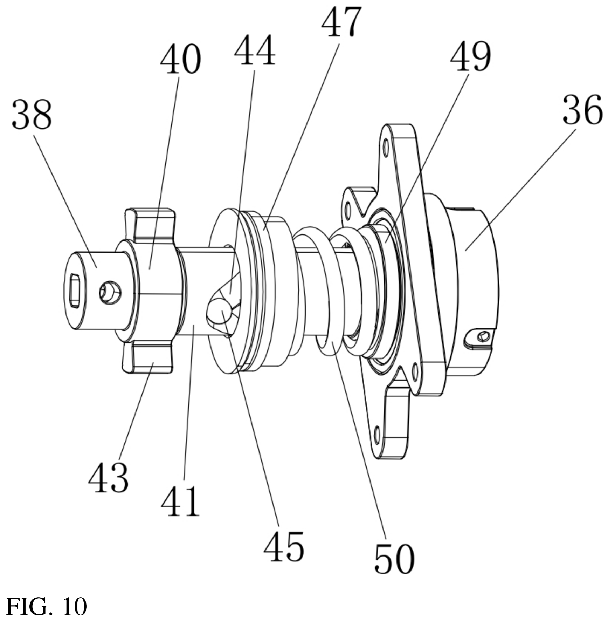

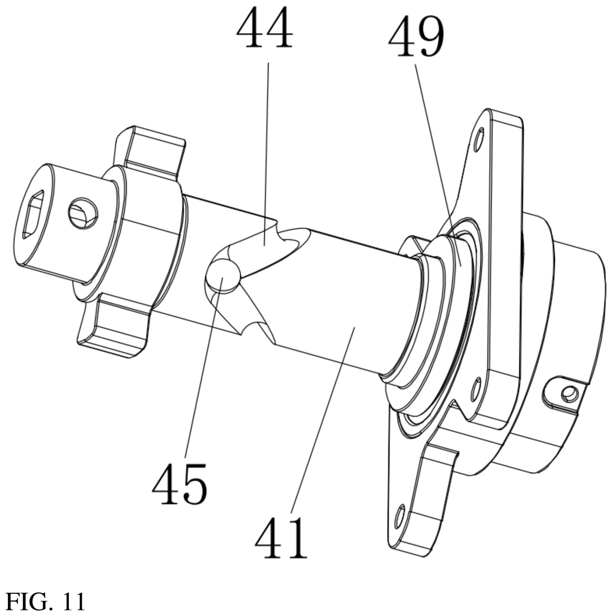

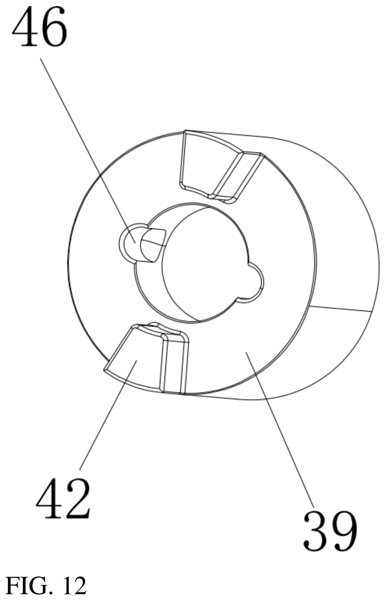

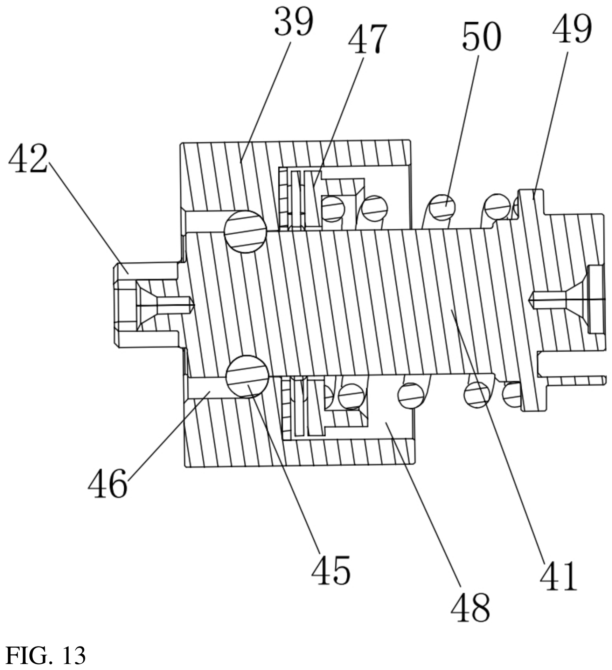

As shown in FIG. 9 to FIG. 13, the driving module 24 includes a driving motor 35, a transmission mechanism 36, an impact mechanism 37, and an output shaft 38. A rear end of the lead screw 22 is coaxially connected to the output shaft 38. The impact mechanism 37 is provided between the output shaft 38 and the transmission mechanism 36 and is connected to the output shaft 38 and the transmission mechanism 36. The impact mechanism 37 is configured to apply an impact force to the output shaft 38. The transmission mechanism 36 is connected to the driving motor 35. The transmission mechanism 36 is configured to decelerate the rotation of the driving motor 35 and then transmit to the output shaft 38.

The driving motor drives the impact mechanism to apply a rotating impact force to the lead screw after being decelerated by the transmission mechanism, thereby driving the lead screw to rotate.

The impact mechanism 37 includes an active impact cylinder 39, a passive impact cylinder 40, and a transmission shaft 41. A rear end of the transmission shaft 41 is connected to the driving motor 35 via the transmission mechanism 36. A front end of the transmission shaft 41 is rotatably connected to a rear end of the passive impact cylinder 40. A front end of the passive impact cylinder 40 is fixedly connected to a rear end of the output shaft 38. The active impact cylinder 39 is sleeved on the transmission shaft 41 and is capable of sliding along the transmission shaft 41. The output shaft 38, the passive impact cylinder 40, the transmission shaft 41, and the active impact cylinder 39 are all coaxial. Two active impact blocks 42 are provided on a front side surface of the active impact cylinder 39 along a circumferential direction. Passive impact blocks 43 are provided on an outer wall of the passive impact cylinder 40 at positions corresponding to the active impact blocks 42. Two bilaterally symmetrical V-shaped ball tracks 44 are provided on an outer wall of the transmission shaft 41. Rolling balls 45 capable of rolling along the V-shaped ball tracks 44 are provided in the V-shaped ball tracks 44. Two bilaterally symmetrical accommodating grooves 46 are provided in the front of an inner wall of the active impact cylinder 39. The direction of the accommodating grooves 46 is parallel to the axis of the active impact cylinder 39. The accommodating grooves 46 are in one-to-one correspondence with the V-shaped ball tracks 44. The accommodating grooves 46 are semi-cylindrical. One half of each rolling ball 45 is located in the corresponding V-shaped ball track 44, and the other half of the rolling ball 45 is located in the corresponding accommodating groove 46. A push ring 47 and a reset spring 50 are further sleeved on the transmission shaft 41. The push ring 47 is capable of sliding along the transmission shaft 41. A groove 48 for accommodating the push ring 47 is provided at a rear side of the active impact cylinder 39. The push ring 47 is located in the groove 48. An annular stop block 49 is provided at a rear end of the transmission shaft 41. A front end of the reset spring 50 is connected to the push ring 47. A rear end of the reset spring 50 is connected to the stop block 49.

The accommodating grooves and the V-shaped ball tracks enclose a space for holding the rolling balls. The transmission mechanism is a planetary reducer. Tips of the V-shaped ball tracks are located on the front side. Tail ends of the two V-shaped ball tracks on the same side are interconnected. After being decelerated by the transmission mechanism, the driving motor drives the transmission shaft to rotate. A rotating shaft drives the active impact cylinder to rotate via the rolling balls, and the two active impact blocks of the active impact cylinder simultaneously impact the two passive impact blocks. The passive impact cylinder is driven to rotate the lead screw upon impact. When the main logging wedge block is inserted into a crack in a tree trunk, resistance is exerted on the lead screw during the process where the rotating lead screw pushes the secondary logging wedge block to extend forward out of the notch, and is transmitted to the passive impact cylinder. When the resistance on the passive impact cylinder exceeds a set value, the active impact blocks cannot impact the passive impact blocks to rotate. The rolling balls are squeezed to move backward along the ball tracks, to drive the active impact cylinder to move backward, and the active impact blocks disengage from the passive impact blocks to lose contact. After the active impact blocks rotate past the passive impact blocks along with the active impact cylinder, the active impact cylinder moves forward to reset under the action of the reset spring. The rolling balls are driven by the active impact cylinder to move forward and return to the foremost end of the V-shaped ball tracks, and the active impact blocks may continue rotating and impacting the passive impact blocks.

## Claims

1. An electric logging wedge, **characterized by** comprising a main logging wedge block (1) and a secondary logging wedge block (2), wherein a notch (3) for accommodating the secondary logging wedge block (2) is provided at the bottom of the main logging wedge block (1), a driving mechanism for driving the secondary logging wedge block (2) to extend forward/retract into the notch (3) is provided at a rear side of the main logging wedge block (1), and non-return structures (4) are provided on a top surface of the main logging wedge block (1) and a bottom surface of the secondary logging wedge block (2).

2. The electric logging wedge according to claim 1, **characterized in that** the main logging wedge block (1) comprises a main wedge body and a connecting member (5), wherein the connecting member (5) is provided at a rear side of the main wedge body, the driving mechanism is fixedly connected to the connecting member (5), a top surface of the main wedge body is a first inclined surface inclined upward from front to back, a bottom surface of the main wedge body is a second inclined surface (55) inclined downward from front to back, and the notch (3) is located on the second inclined surface (55).

3. The electric logging wedge according to claim 2, **characterized in that** a front end of the first inclined surface is connected to a front end of the second inclined surface (55), and the bottom surface of the secondary logging wedge block (2) is a third inclined surface inclined downward from front to back.

4. The electric logging wedge according to claim 3, **characterized in that** when the secondary logging wedge block (2) retracts into the notch (3), an overall longitudinal section of the main wedge body and the secondary logging wedge block (2) is an isosceles triangle, wherein a base of the isosceles triangle is in a vertical state; and a longitudinal section of the secondary logging wedge block (2) is a right triangle, wherein a hypotenuse of the right triangle is located on the third inclined surface, a longer leg of the right triangle is in a horizontal state, and a shorter leg of the right triangle is in a vertical state.

5. The electric logging wedge according to claim 3, **characterized in that** the main wedge body comprises a first wedge block (6) and plate bodies (7) symmetrically provided on left and right sides of the first wedge block (6), wherein a first connecting notch (8) is provided at a rear side of the first wedge block (6), a first connecting block (9) matched with the first connecting notch (8) is provided in the first connecting notch (8), the first wedge block (6) is detachably connected to the plate bodies (7), the first connecting block (9) is detachably connected to the plate bodies (7), the first wedge block (6) is detachably connected to the first connecting block (9), and the connecting member (5) is fixedly connected to a rear side of the first connecting block (9).

6. The electric logging wedge according to claim 5, **characterized in that** the secondary logging wedge block (2) comprises a second wedge block (10), wherein a second connecting notch (11) is provided at a rear side of the second wedge block (10), a second connecting block (12) matched with the second connecting notch (11) is provided in the second connecting notch (11), and the second wedge block (10) is detachably connected to the second connecting block (12).

7. The electric logging wedge according to claim 6, **characterized in that** a first limiting notch (13) is provided at a front side of the first connecting notch (8), a first limiting block (14) matched with the first limiting notch (13) is provided at a front side of the first connecting block (9), a plurality of second limiting notches (15) are provided on an upper surface of the first connecting block (14), second limiting blocks (16) matched with the second limiting notches (15) are provided at positions, corresponding to the second limiting notches (15), on the top of the first connecting notch (13), a third limiting notch (17) is provided at a front side of the second connecting notch (11), a third limiting block (18) matched with the third limiting notch (17) is provided at a front side of the second connecting block (12), a plurality of fourth limiting notches (19) are provided on a lower surface of the second connecting block (12), and fourth limiting blocks (20) matched with the fourth limiting notches (19) are provided at positions, corresponding to the fourth limiting notches (19), at the bottom of the second connecting notch (11).

8. The electric logging wedge according to claim 6, **characterized in that** a through hole (21) is provided on the connecting member (5), the through hole (21) is communicated with the notch (3), and the driving mechanism comprises a lead screw (22), a lead screw nut (23), and a driving module (24), wherein the driving module (24) is fixedly connected to the connecting member (5), the lead screw (22) extends into the notch (3) through the through hole (21), the lead screw nut (23) is sleeved on the lead screw (22) and fixedly connected to the secondary logging wedge block (2), the driving module (24) is configured to drive the lead screw (22) to rotate, a strip-shaped guide hole (25) along a front-back direction is provided on the plate body (7), the strip-shaped guide hole (25) is communicated with the notch (3), guide columns (26) are symmetrically provided on left and right sides of the second connecting block (12), and the guide columns (26) pass through the strip-shaped guide hole (25) on the corresponding side and are capable of sliding forward and backward along the strip-shaped guide hole (25).

9. The electric logging wedge according to claim 6, **characterized in that** a guide groove (29) along the front-back direction is provided on a bottom surface of the first connecting block (9), a guide block (30) matched with the guide groove (29) is provided on a top surface of the second connecting block (12), the guide block (30) is located in the guide groove (29) and is capable of sliding forward and backward along the guide groove (29), a first limiting surface (31) inclined backward is provided at a front side of the guide groove (29), and a second limiting surface (32) matched with the first limiting surface (31) is provided at a front side of the guide block (30).

10. The electric logging wedge according to claim 1, **characterized in that** the non-return structure (4) comprises a plurality of convex strips (34) arranged side by side from front to back, wherein the convex strips (34) are provided along a left-right direction, the convex strips (34) have a triangular longitudinal section, and top surfaces of the convex strips (34) are inclined from front to back to the side far away from the main logging wedge block (1).

11. The electric logging wedge according to claim 6, **characterized in that** the driving module (24) comprises a driving motor (35), a transmission mechanism (36), an impact mechanism (37), and an output shaft (38), wherein a rear end of the lead screw (22) is coaxially connected to the output shaft (38), the impact mechanism (37) is provided between the output shaft (38) and the transmission mechanism (36) and is connected to the output shaft (38) and the transmission mechanism (36), the impact mechanism (37) is configured to apply an impact force to the output shaft (38), the transmission mechanism (36) is connected to the driving motor (35), and the transmission mechanism (36) is configured to decelerate the rotation of the driving motor (35) and then transmit to the output shaft (38).

12. The electric logging wedge according to claim 11, **characterized in that** the impact mechanism (37) comprises an active impact cylinder (39), a passive impact cylinder (40), and a transmission shaft (41), wherein a rear end of the transmission shaft (41) is connected to the driving motor (35) via the transmission mechanism (36), a front end of the transmission shaft (41) is rotatably connected to a rear end of the passive impact cylinder (40), a front end of the passive impact cylinder (40) is fixedly connected to a rear end of the output shaft (38), the active impact cylinder (39) is sleeved on the transmission shaft (41) and is capable of sliding along the transmission shaft (41), the output shaft (38), the passive impact cylinder (40), the transmission shaft (41), and the active impact cylinder (39) are all coaxial, two active impact blocks (42) are provided on a front side surface of the active impact cylinder (39) along a circumferential direction, passive impact blocks (43) are provided on an outer wall of the passive impact cylinder (40) at positions corresponding to the active impact blocks (42), two bilaterally symmetrical V-shaped ball tracks (44) are provided on an outer wall of the transmission shaft (41), rolling balls (45) capable of rolling along the V-shaped ball tracks (44) are provided in the V-shaped ball tracks (44), two bilaterally symmetrical accommodating grooves (46) are provided in the front of an inner wall of the active impact cylinder (39), the direction of the accommodating grooves (46) is parallel to the axis of the active impact cylinder (39), the accommodating grooves (46) are in one-to-one correspondence with the V-shaped ball tracks (44), the accommodating grooves (46) are semi-cylindrical, one half of each rolling ball (45) is located in the corresponding V-shaped ball track (44), the other half of the rolling ball (45) is located in the corresponding accommodating groove (46), a push ring (47) and a reset spring (50) are further sleeved on the transmission shaft (41), the push ring (47) is capable of sliding along the transmission shaft (41), a groove (48) for accommodating the push ring (47) is provided at a rear side of the active impact cylinder (39), the push ring (47) is located in the groove (48), an annular stop block (49) is provided at a rear end of the transmission shaft (41), a front end of the reset spring (50) is connected to the push ring (47), and a rear end of the reset spring (50) is connected to the stop block (49).

13. The electric logging wedge according to claim 1, **characterized in that** a protective shell (51) is provided at the rear side of the main logging wedge block (1), wherein the driving mechanism is located in the protective shell (51), a battery pack (52) for supplying power to the electric logging wedge is provided at a rear end of the protective shell (51), the battery pack (52) is detachably connected to the protective shell (51), a controller is provided in the protective shell (51), the controller is electrically connected to the driving motor (35), and the controller is configured to control the operation of the electric logging wedge.

14. The electric logging wedge according to claim 13, **characterized in that** a sensor is provided on the top surface of the main logging wedge block, wherein the sensor is configured to sense whether there is an obstacle above the main logging wedge block, and the sensor is electrically connected to the controller.
